# FASCICULE DE BREVET EUROPEEN

(11) **EP 2 252 933 B1**
(45) Date de publication et mention de la délivrance du brevet: **12.09.2018**
(21) Numéro de dépôt: 09719320.5
(22) Date de dépôt: 13.03.2009
(51) Int. Cl.: G06F 9/44

(54) **ARCHITECTURE DE TRAITEMENT INFORMATIQUE ACCELERE**
ARCHITEKTUR FÜR BESCHLEUNIGTE COMPUTERVERARBEITUNG
ARCHITECTURE FOR ACCELERATED COMPUTER PROCESSING

(30) Priorité: 14.03.2008 FR 0801420
(43) Date de publication de la demande: 24.11.2010
(73) Titulaire: HPC Project, 34950 Montpellier (FR)
(72) Inventeur: FIORINI, Pierre, 92130 Issy les Moulineaux (FR)
(74) Mandataire: Bell, Mark
(86) Numéro de dépôt international: PCT/EP2009/052968
(87) Numéro de publication internationale: WO 2009/112566

(56) Documents cités:
- WO-A-02/21268
- US-A1- 2004 083 462
- US-A1- 2005 055 677
- US-A1- 2007 283 337
- US-A1- 2007 294 680
- A. NOLL ET AL: "CellVM: A Homogeneous Virtual Machine Runtime System for a Heterogenous Single-Chip Multiprocessor" TECHNICAL REPORT, [Online] 2006, pages 1-11, XP002503832 UNIVERSITY OF CALIFORNIA - IRVINE Extrait de l'Internet: URL:http://www.ics.uci.edu/~franz/Site/pub s-pdf/ICS-TR-06-17.pdf> [extrait le 2008-11-13]
- "Boosting software Processing performance With Coprocessor synthesis" CRITICALBLUE WHITE PAPER, [Online] juin 2005 (2005-06), pages 1-6, XP002503721 Extrait de l'Internet: URL:http://www.criticalblue.com/downloads/ CriticalBlueWhitepaper-June2005.pdf> [extrait le 2008-11-13]

## Description

L'invention s'applique au domaine des calculateurs devant traiter des charges intensives. Cela peut être le cas de systèmes informatiques dédiés à des applications graphiques ou à des applications de calcul numérique, mais ce peut également être le cas de processeurs inclus dans des chaînes de traitement de signal ou de données. Les machines de calcul intensif peuvent être de types différents. Le plus souvent, elles comporteront plusieurs processeurs entre lesquels des parties d'une application seront réparties alors que les processeurs partagent des zones mémoires communes. Dans les architectures de type SMP (Shared Memory MultiProcessor ou machine multi-processeur à mémoire partagée), les traitements sont répartis entre au moins deux processeurs qui se partagent un accès à une même mémoire commune. Dans les architectures de type Distributed Memory Multiprocessor ou machine à mémoire répartie, la répartition des traitements dépendra des localisations relatives des différents processeurs et des données en mémoire, donc de l'architecture physique et non pas seulement de l'applicatif. Une autre forme de parallélisme peut résulter des jeux d'instructions de commande des processeurs. C'est, par exemple, le cas pour les traitements de nature SIMD (Single Instruction, Multiple Data ou Instruction unique/Données multiples) pour le support desquels des jeux d'instructions spécifiques ont été rajoutés en plus des instructions usuelles. On connaît ainsi différents jeux d'instructions, notamment SSE (Streaming SIMD Extensions ou Extensions streaming SIMD) ou AltiVec (marque déposée par Apple, IBM et Freescale Semiconducteurs pour désigner un jeu d'instructions SIMD opérant sur vecteurs de 128 bits). Il existe également des techniques d'accélération qui partent du constat qu'un processeur unique peut être parfaitement adapté à une partie des traitements que doit effectuer un ordinateur mais qu'il peut être nécessaire pour certaines applications de le faire assister par un processeur additionnel implanté sur une carte accélératrice « add-on ». Dans ce cas, l'architecture traditionnelle consiste le plus souvent à faire exécuter sur le processeur de la carte add-on la totalité des applicatifs spécialisés. Le processeur de la structure d'accueil est alors sous employé puisqu'il ne gérera que les entrées sorties en provenance du processeur additionnel. Cela peut conduire à devoir, pour des performances données, surdimensionner le processeur de la carte add-on, ce qui entraîne nécessairement un surcoût. L'architecture n'est donc pas optimale.

Il est connu du document US2007283337 un compilateur pour une architecture multiprocesseurs hétérogène qui extrait d'un programme à exécuter les parties à exécuter en parallèle.

Il est également connu des documents US2004083462 et "Boosting software processing performance with coprocessor synthesis", Critical Blue Whitepaper, juin 2005, pages 1-6, des systèmes qui réalisent une analyse des résultats de test d'exécution d'un programme afin d'identifier des parties de code qui gagneraient à être exécutées sur un co-processeur.

Il est enfin connu de "CellVM: a homogeneous virtual machine runtime system for a heterogeneous single-chip multiprocessor", Albert Noll et al, décembre 2006, Technical report University of California- Irvine, pages 1-11, une machine virtuelle pour gérer une architecture asymétrique composée d'une machine principale et d'un ensemble de processeurs spécialisés.

La présente invention résout ce problème d'optimalité en procurant des moyens de répartition des traitements de l'applicatif ayant des besoins de calcul intensif entre le ou les processeurs hôte et le ou les processeurs de la carte add-on.

A cette fin, la présente invention divulgue un système de traitement informatique comprenant un calculateur hôte, un calculateur additionnel, un module applicatif constitué d'un premier code exécutable, un module d'analyse dudit premier code exécutable et un module de génération d'un deuxième code exécutable segmenté notamment en blocs de code qui s'exécutent de manière préférentielle sur l'un des deux calculateurs, caractérisé en ce que ledit deuxième code exécutable comprend un sous-module de gestion de la répartition des traitements entre le calculateur hôte et le calculateur additionnel et un sous-module de gestion du calculateur additionnel en tant que machine virtuelle qui exécute les blocs alloués audit calculateur additionnel.

Avantageusement le module d'analyse dudit système de traitement informatique reçoit en entrée le premier code exécutable dudit applicatif et fournit notamment en sortie des métadonnées constituées par les points d'entrée de blocs de code susceptibles de constituer des points chauds de calcul, les structures de données utilisées par lesdits points chauds et les librairies de sous-programmes appelées par ledit premier code exécutable.

Avantageusement, les métadonnées en sortie du module d'analyse constituent des entrées du module de génération du deuxième code exécutable.

Avantageusement, les métadonnées en sortie du module d'analyse sont validées ou modifiées à l'exécution du deuxième code exécutable.

Avantageusement, le deuxième code exécutable s'exécute de manière préférentielle en mode utilisateur sur le calculateur hôte.

Avantageusement, le deuxième code exécutable utilise des fonctions spécifiquement optimisées implantées sur un driver de connexion du calculateur additionnel au calculateur hôte.

Avantageusement, le sous-module de gestion de la répartition des traitements entre le calculateur hôte et le calculateur additionnel est programmé pour diriger l'exécution de blocs basiques sur le calculateur hôte.

Avantageusement, le sous-module de gestion de la répartition des traitements entre le calculateur hôte et le calculateur additionnel est programmé pour donner au deuxième code exécutable le contrôle de l'applicatif pour exécuter sur le calculateur additionnel des blocs choisis en fonction de critères paramétrables et pour reprendre le contrôle de l'applicatif à la fin de l'exécution de chaque bloc.

Avantageusement, le sous-module de gestion de la répartition des traitements entre le calculateur hôte et le calculateur additionnel est programmé pour que les blocs du deuxième code exécutable soient des copies de blocs du premier code exécutable, lesdits blocs du premier code exécutable étant conservées dans une mémoire cache.

Avantageusement, le sous-module de gestion de la répartition des traitements entre le calculateur hôte et le calculateur additionnel comprend des instructions pour détecter les blocs de code les plus actifs.

Avantageusement, le sous-module de gestion de la répartition des traitements entre le calculateur hôte et le calculateur additionnel est programmé de manière à basculer l'exécution de l'applicatif vers les blocs du premier code exécutable pour traiter les exceptions.

Avantageusement, le sous-module de gestion de la répartition des traitements entre le calculateur hôte et le calculateur additionnel est programmé pour réaliser selon des règles paramétrables des copies du contexte de l'applicatif.

Avantageusement, le sous-module de gestion de la répartition des traitements entre le calculateur hôte et le calculateur additionnel comprend un sous-module de gestion d'une mémoire cache d'exécution de l'applicatif où sont stockées les structures des données sélectionnées pour être appelées par les blocs exécutés sur le calculateur additionnel.

Avantageusement, le sous-module de gestion du calculateur additionnel est programmé pour exécuter des librairies de sous-programmes correspondant à des profils et des sémantiques d'exécution définis pour des applicatifs particuliers.

Avantageusement, une machine virtuelle correspondant à un applicatif particulier est chargeable dynamiquement avant le lancement dudit applicatif par l'environnement.

Avantageusement, un des profils définit le calculateur additionnel comme une machine vectorielle.

Avantageusement, un des profils définit le calculateur additionnel comme apte à opérer selon un modèle de calcul par flux.

Avantageusement, le sous-module de gestion du calculateur additionnel comprend une interface de programmation de haut niveau des librairies pour chaque profil.

Avantageusement, le sous-module de gestion du calculateur additionnel comprend une interface de programmation de bas niveau du second code exécutable.

L'utilisation d'une architecture selon l'invention présente également l'avantage qu'elle permet d'améliorer d'un ordre de grandeur le rapport performance / coût. En outre, le système présente une grande versatilité et peut être optimisé pour différents applicatifs et environnements matériels.

L'invention sera mieux comprise et ses différentes caractéristiques et avantages ressortiront de la description qui suit de plusieurs exemples de réalisation et de ses figures annexées dont :
- La figure 1 représente l'architecture matérielle d'un système de traitement informatique selon l'invention ;
- La figure 2 représente l'architecture fonctionnelle d'un système de traitement informatique selon l'invention ;
- La figure 3 représente les éléments d'un hyperviseur selon l'invention ;
- La figure 4 représente les éléments d'une machine virtuelle distribuée selon l'invention ;
- La figure 5 représente l'enchaînement des traitements dans un mode de réalisation de l'invention.

Dans la suite de la description, on utilise indifféremment les expressions suivantes :
- Calculateur hôte ou « front-end » ;
- Calculateur additionnel ou « add-on » ou « appliance » ;
- Second code exécutable ou « run-time » ;
- Hors-ligne ou « off-line » ;
- Retour programme ou « call-back » ;

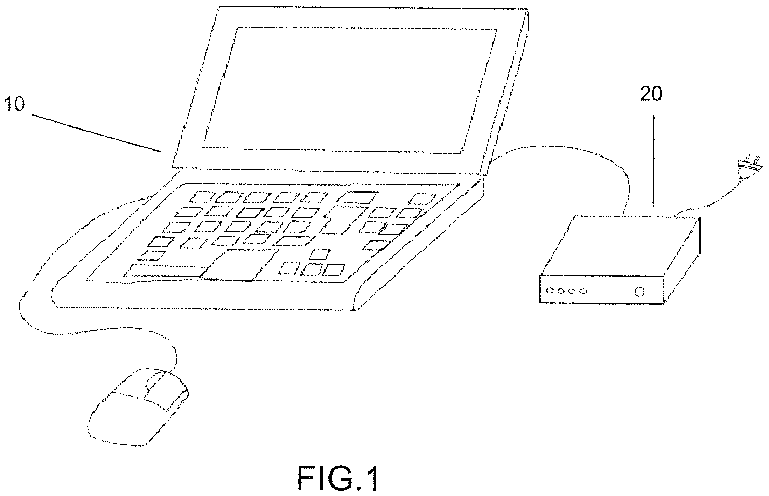

Un cas typique d'utilisation de l'architecture selon l'invention sera le couplage d'un calculateur additionnel à un calculateur hôte implanté sur un ordinateur. Cet ordinateur peut être un poste fixe ou un portable. Un tel cas est représenté sur la figure 1. L'ordinateur 10 peut être utilisé par un ingénieur pour exécuter des charges intensives en calcul. Dans une autre optique d'utilisation, il peut aussi être utilisé comme terminal de jeu hors ligne ou en ligne dans l'hypothèse où il dispose d'une connexion internet. Le calculateur hôte est le processeur standard de l'ordinateur portable, tel qu'un Intel Pentium™ ou Core Duo™ implanté sur la carte mère de l'ordinateur portable. Il peut bien entendu s'agir d'un ordinateur, éventuellement utilisé comme serveur d'application ou de données d'un réseau de postes clients qui lui sont connectés. Il peut également s'agir d'un processeur spécialisé du type processeur de traitement de signal (Digital Signal Processor ou DSP). Le calculateur additionnel 20 peut à son tour être un processeur identique au calculateur hôte ou un processeur complémentaire (DSP pour les applications graphiques et celles qui exécutent beaucoup de fonctions DCT ou FFT (Direct Cosine Transform ou Fast Fourier Transform). Un certain nombre de circuits doivent être associés au calculateur additionnel tels que des circuits de mémoire vive et des éléments de stockage. Des éléments de code permettant le fonctionnement des calculateurs en mode coopératif comme prévu par l'invention sont implantés dans ces circuits mémoires. Le système logiciel accompagnant l'appliance est intégré pour former un environnement distribué entre le front-end et l'appliance. Cet environnement fournit à la fois un analyseur off-line statique et un run-time optimisant. L'environnement est éventuellement extensible par des bibliothèques destinées à faciliter la programmation par l'intermédiaire d'un atelier de développement logiciel ou IDE (Integrated Development Environment) pour des développements applicatifs spécifiques. Les interfaces fournies avec l'infrastructure logicielle sont de différents niveaux permettant un contrôle plus ou moins fin de cette infrastructure. En particulier, un driver assure la connexion entre les deux calculateurs. Ces éléments peuvent être le cas échéant implantés par l'intermédiaire d'un FPGA ou un ASIC (Field Programmable Gate Array ou Application Specific Integrated Circuit) dans le but d'obtenir des niveaux de performance supérieurs. Le calculateur externe augmenté éventuellement de ces circuits additionnels sera normalement intégré dans un boitier relié à l'ordinateur portable par un port USB (Universal Serial Bus) ou IEEE1384. Le boitier disposera d'une alimentation spécifique. Dans le cas d'un ordinateur de bureau ou d'un serveur, le calculateur additionnel et son électronique de proximité peuvent être implantés sur une carte qui est ajoutée dans un des slots disponibles dans le boitier de l'ordinateur. On peut également envisager que la ressource de calcul additionnelle soit partagée entre plusieurs ordinateurs reliés entre eux par un réseau local ou par l'intermédiaire d'un protocole Internet.

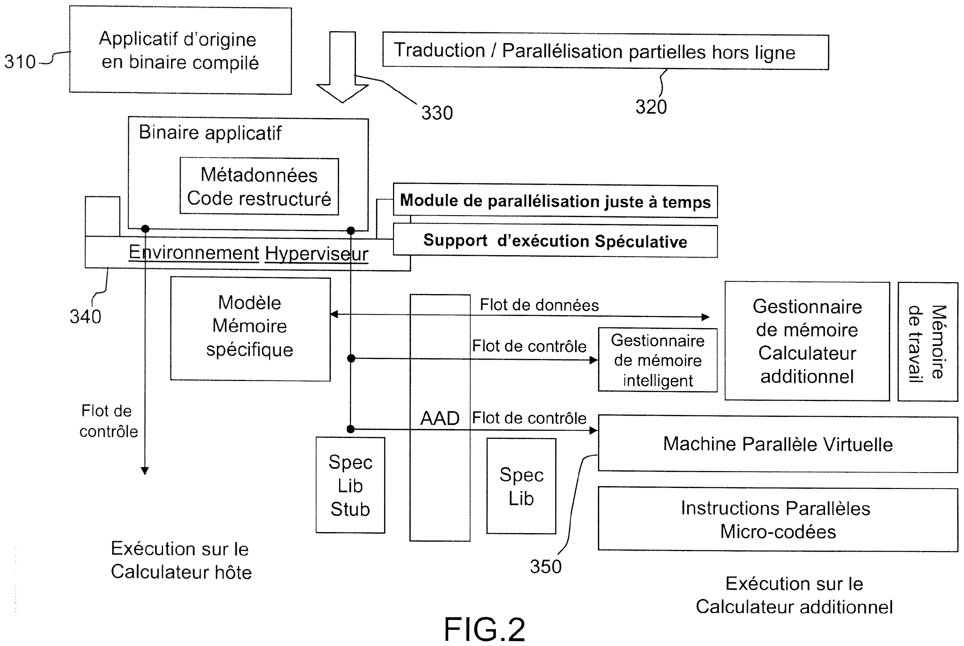

Comme on peut le voir sur la figure 2, le système comprend un module 320 d'analyse du code applicatif 310 avant exécution. Ce module travaille sur le code applicatif en binaire. Il a pour objectif de préparer des structures de métadonnées qui facilitent le travail du code exécutable modifié avant exécution. Le code exécutable modifié est désigné par l'expression « runtime » ou « second code exécutable ». Le code applicatif normalement exécuté sur le calculateur hôte est désigné par l'expression « premier code exécutable ». Les métadonnées sont des structures d'accueil des données produites par l'analyse du code applicatif. Le module d'analyse du code applicatif possède les fonctionnalités suivantes :
- il détermine les points d'entrée de blocs de code susceptibles de constituer à l'exécution des points « chauds » de calcul tels que les boucles ; on entend par points chauds des blocs de calcul imposant une charge intensive au calculateur qui les exécute ; ces blocs sont des candidats pour une traduction dynamique à l'exécution permettant une exécution sur le calculateur additionnel ; on appelle blocs basiques les ensembles d'instructions binaires comprenant un seul point d'entrée et un seul point de sortie ;
- l'analyseur est également destiné à identifier les structures de données utilisées par ces blocs chauds ; ces structures de données sont destinées à être exécutées en priorité sur le calculateur additionnel, leur accès sur le calculateur hôte s'effectuant seulement à travers un cache paginé ;
- enfin, l'analyseur est chargé de déterminer les librairies qui seront chargées dynamiquement par le code ; dans certains cas, des versions optimisées de ces librairies pourront être fournies en complément de l'environnement logiciel : l'analyseur sera alors chargé d'identifier les appels pouvant être redirigés vers des versions optimisées.

L'analyseur génère un ensemble de métadonnées qui prépare le travail du traducteur hors ligne. Mais, en aucun cas, l'analyseur hors ligne ne modifie les exécutables : ces métadonnées sont maintenues indépendamment du programme pour une mise en oeuvre par le deuxième code exécutable. Un fichier conjoint est créé qui contient l'ensemble des informations extraites de l'applicatif. Les parties du code les plus susceptibles de devenir des points chauds d'exécution sont traduites dans un langage intermédiaire à partir du binaire x86. La génération des parties du programme destinées à une exécution sur l'accélérateur est grandement facilitée par cette transformation.

Dans l'hypothèse où le code source est disponible, l'introduction d'annotations par un programmeur guidant la production de métadonnées par l'analyseur de code est possible.

Le code exécutable de l'application est converti en un deuxième code exécutable structuré en blocs dont l'exécution est contrôlée par un environnement de supervision et d'optimisation de l'applicatif. Cet environnement de supervision peut prendre appui dans certains cas sur des bibliothèques spécifiques permettant de paralléliser l'exécution entre les deux calculateurs et de réaliser celle-ci de manière éventuellement spéculative. L'exécution spéculative repose en particulier sur une anticipation des valeurs de sortie de boucles permettant normalement de gagner du temps. On peut citer comme exemple de bibliothèque spécifique pour le calcul scientifique la bibliothèque LAPACK ou Linear Algebra Package.

Le deuxième code exécutable est structuré en blocs susceptibles de s'exécuter soit sur le calculateur hôte, soit sur le calculateur additionnel. Il s'exécute par l'intermédiaire d'un environnement jouant à la fois le rôle d'un hyperviseur 20 qui contrôle l'exécution de l'applicatif sur le calculateur hôte et le rôle d'une machine virtuelle 30 qui exécute des blocs de code sur le calculateur additionnel.

Ce second code exécutable s'exécute dans la mesure du possible en mode utilisateur sur le calculateur hôte et non en mode système, dans la mesure où un passage du mode utilisateur au mode système est très coûteuse et s'apparente à un appel système. Ce second code s'appuie cependant pour certaines fonctions sur un driver 40 qui assure la connexion du calculateur additionnel. Les traitements sont agencés pour que les appels à l'OS (Operating System) du calculateur hôte soient minimisés.

L'hyperviseur 20 de la figure 2 est un module logiciel qui assure la répartition de traitements entre plusieurs calculateurs. L'hyperviseur selon l'invention assure l'exécution des blocs du second exécutable sur le calculateur hôte. Il permet à l'environnement de récupérer le contrôle de l'application pour s'assurer que certains blocs bien choisis seront exécutés sur l'appliance. Les blocs en exécution sont des copies des blocs de code actifs maintenues dans un cache. Ces copies sont instrumentées par des patches ou morceaux de code exécutable de manière à disposer des informations permettant de détecter les blocs les plus actifs. L'exécution sous le contrôle de l'hyperviseur peut en cas de besoin reprendre sur une copie exacte du code de l'application lorsque ceci est utile pour fournir un état précis de l'exécution comme cela peut être nécessaire pour le traitement des exceptions en particulier.

A la fin de l'exécution d'un bloc, le contrôle revient à l'hyperviseur, de manière à permettre à ce dernier de maîtriser les choix en termes de flot de contrôle de l'application. L'hyperviseur assure en tant que de besoin le maintien d'une copie du contexte de l'application. Dans le cas d'un passage du flot de contrôle vers l'appliance, cette indirection du flot de contrôle prend la forme de l'émulation d'un appel de fonction au niveau de l'exécution sur le front-end. L'hyperviseur s'assure de capturer les appels système, les « call backs », les exceptions, ainsi que les appels aux librairies dynamiques de manière à assurer leur exécution tout en lui permettant de reprendre le contrôle ultérieurement.

L'hyperviseur gère le modèle de mémoire d'exécution pour l'application par l'intermédiaire d'un module spécifique 50. Ce module fournit à l'application un cache de données pour les structures de données qui ont été sélectionnées pour être allouées sur la mémoire du calculateur additionnel. Le changement du flot de contrôle vers le module additionnel implique donc une synchronisation des pages modifiées vers la mémoire du module.

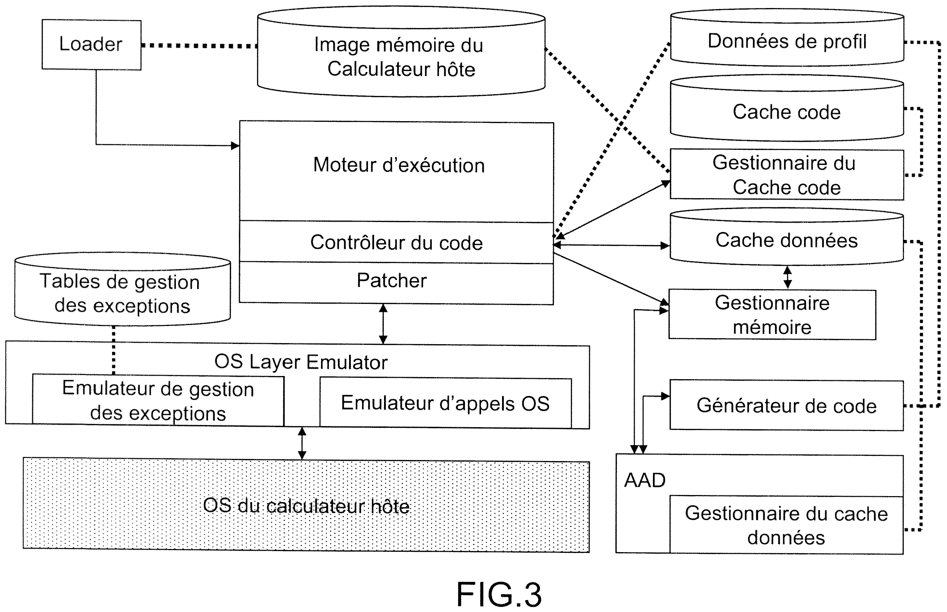

La figure 3 illustre une architecture possible d'un hyperviseur selon l'invention. L'Hyperviseur Run-Time (HRT) s'exécute en mode utilisateur (« user ») et est un processus standard composé d'un certain nombre de threads, ou sous-processus, qui s'exécutent pour fournir un certain nombre de services d'émulation autour de l'application :
▪ Loader : assure l'initialisation du lancement d'une application accélérée ;
▪ Execution Engine : gère le flot de contrôle des threads applicatifs ;
▪ Code Cache Manager : gère la copie des pages de code à executer ;
▪ OS Layer Emulator : assure l'interface avec l'OS de manière à permettre à l'Execution Engine de ne pas perdre le contrôle de l'application ;
▪ Memory Manager : gère l'allocation de la mémoire sur le tas de l'application ;
▪ Code Generator : génère dynamiquement le code traduit pour son exécution sur le module de calcul additionnel.

Un certain nombre de structures de données permettent à l'hyperviseur de gérer les threads de l'application :
▪ Code Cache : contient les copies des pages du code de l'application devant être exécutées sur le Front-End.
▪ Data Cache : contient les copies des pages du tas de l'application nécessaire à l'exécution Front-End.
▪ Profile Data : contient des informations sur la dynamique d'exécution des threads de l'application.
▪ Exception Side Table : contient les informations nécessaires pour l'émulation des exceptions.

Il est complété par un driver qui s'exécute en mode système, l'Appliance Architecture Driver (AAD) décrit plus loin.

L'application accélérée ne constitue pas un processus autonome, mais s'exécute au sein du processus de l'HRT. L'ensemble des threads décrivant les flots de contrôle de l'application sont des threads natives créées au sein du processus de l'HRT.

Le loader remplace le loader système vu de l'application. Il charge les différentes données relatives à l'exécutable de l'application dans l'HRT.

Le loader se charge de créer dans l'HRT les structures de données qu'initialiserait la création d'un nouveau processus au niveau système. Si une application est inscrite comme candidate à l'accélération, il est maintenu une structure pré-initialisée par anticipation de manière à accélérer le lancement de l'exécutable.

Le loader assure les traitements associés au lancement du processus de l'application. Il alloue la mémoire et charge les éléments constitutifs du processus: contexte, image, etc...Dans le cas d'une implémentation sous Windows, le loader s'assure en particulier de la gestion des cas où l'exécutable est de type MS-DOS, Win16 ou POSIX pour pouvoir assurer le lancement des images associées.

Après la fin de l'initialisation du processus, le loader passe la main à l'Execution Engine.

L'Execution Engine assure le suivi du flot de contrôle des threads de l'application. Il est, en particulier, responsable de la bascule de l'exécution entre le front-end et l'appliance. Le Code Cache Manager assure le chargement des pages de code qui sont à exécuter par les threads de l'application.

Le Code Generator utilise les méta-données associées au code de l'application pour sélectionner les blocs qui seront exécutés sur l'appliance. Une fois, ces blocs sélectionnés, il se charge de générer le code de la machine virtuelle nécessaire à l'exécution des blocs sur l'appliance, puis de les transmettre à la machine virtuelle en utilisant l'Architecture Driver.

L'OS Layer Emulator se charge d'émuler les interactions entre les threads de l'application avec le système de manière à éviter la perte du contrôle de l'application par l'hyperviseur.

Le tas du processus HRT est le tas utilisé par l'Execution Engine. Le tas correspondant aux différents threads de l'application est, quant à lui, alloué dans la mémoire de l'appliance. Un Data Cache à la granularité de la page contient une copie des pages accédées par les threads en cours d'exécution sur le front-end. Vu du système d'exploitation, ce Data Cache est un fichier mappé en mémoire. Le Memory Manager crée une structuration du Data Cache. Le code de l'application est modifié par anticipation en conséquence.

Le mécanisme de gestion de la mémoire du système d'exploitation s'assure naturellement d'amener une copie de la page concernée dans la mesure où une donnée est accédée par un thread sur le front-end. La faute de page est capturée par l'Execution Engine qui transfère la demande à l'AAD.

Inversement quand le contrôle est passé à l'appliance, l'Execution Engine s'assure que toutes les pages dont la copie a été modifiée sont recopiées sur le calculateur additionnel.

Le Memory Manager prend en charge l'allocation des données dynamiques dans le tas de l'application situé sur le calculateur additionnel.

L'AAD s'occupe de tous les transferts de données bas niveau entre le claculateur hôte et le calculateur additionnel.

Les transferts entre les deux calculateurs consistent, d'une part, en des codes à exécuter et, d'autre part, en des pages de données liées à la gestion du tas.

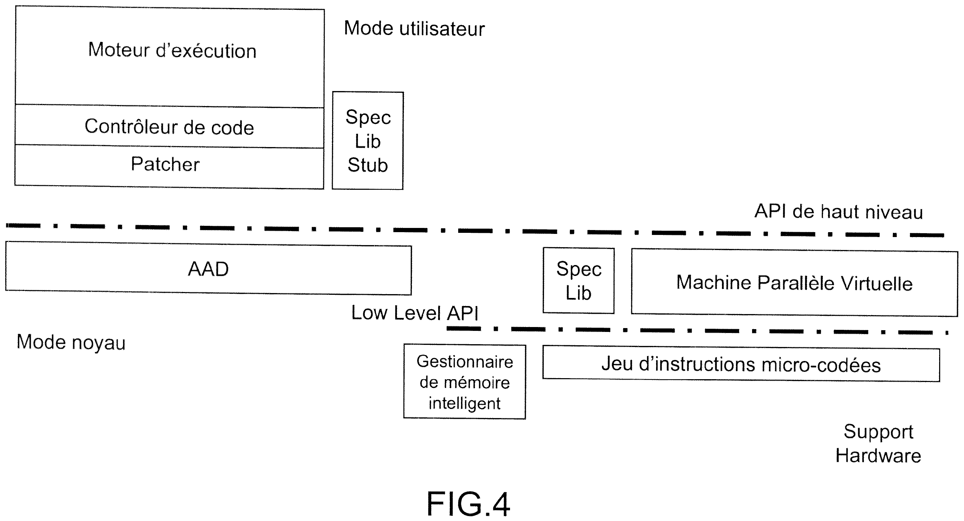

On se réfère maintenant à la figure 4 pour décrire la structure et le fonctionnement de la machine virtuelle implémentée dans le second code exécutable.

Le code sur le module de calcul additionnel s'exécute sur une machine virtuelle consistant en une implémentation sur le circuit particulier de l'accélérateur d'un modèle de parallélisme générique. Cette machine virtuelle est complétée par un ensemble de librairies. Un ensemble « machine virtuelle + librairies » définit un profil et correspond à une sémantique d'exécution. Les profils peuvent être spécifiques à des applications particulières. Une machine virtuelle est chargeable dynamiquement avant le lancement d'une application par l'environnement.

Parmi les modèles de parallélisme représentés, l'un d'eux définit le calculateur additionnel comme une machine vectorielle disposant donc d'instructions sur des données représentées sous forme de vecteurs. Il est également prévu un modèle de type calcul à flux dans lequel les données sont fournies à des coeurs sous la forme de flux de données.

Il est alors possible de définir directement des modules en utilisant le jeu d'instructions de haut niveau de la machine virtuelle et l'interface de programmation applicative (Application Programmation Interface ou API) des librairies. L'ensemble constitue une API haut niveau pour chaque profil, API qui peut rester stable dans le temps pour permettre la pérennité des développements réalisés. Les développements sur les profils s'effectuent en langage de haut niveau facilement accessible à l'homme de l'art de la programmation.

La machine virtuelle et les librairies s'appuient, elles-mêmes, sur un run-time micro-codé dépendant du matériel du module. Le module intègre en particulier des instructions spécifiques de gestion de la mémoire avec un support matériel spécifique. Ce run-time est programmable par une API de bas niveau qui n'est a priori pas exposée à l'environnement système du front-end. Il se présente comme un firmware qui, par défaut, n'est pas modifiable dans un fonctionnement normal de l'appliance. Cependant, un nouveau firmware peut être chargé par modification d'une mémoire flash.

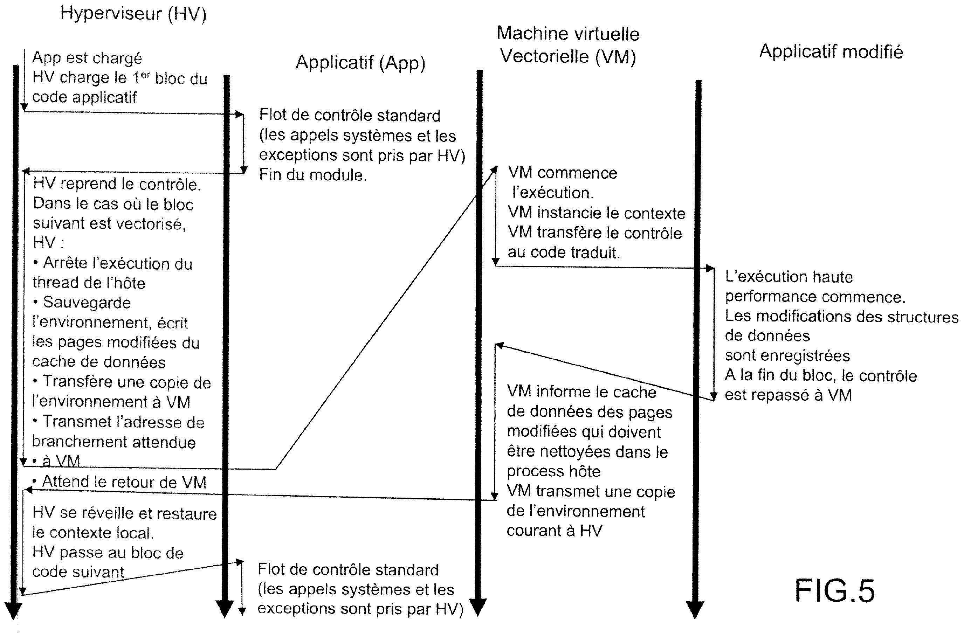

La figure 5 montre l'enchaînement des traitements dans un des modes d'utilisation du système de traitement informatique selon l'invention.

Le lancement du programme se fait dans l'environnement du système runtime qui charge alors l'exécutable de l'application. Les premiers blocs de code sont copiés dans le « code cache » et l'exécution est transférée sur le premier bloc à exécuter. A chaque fin de bloc, le contrôle est transféré à l'hyperviseur de manière à ce qu'il détermine un éventuel transfert du flot vers la machine virtuelle. L'hyperviseur reprend également la main dans le cas d'appels système ou d'exception se produisant en cours d'exécution. Lorsqu'un transfert du flot doit être réalisé vers la machine virtuelle, l'hyperviseur émule un appel de fonction en poussant sur la pile le contexte du processus front-end ainsi que l'adresse de retour, et en transmettant une copie de ce contexte à la machine virtuelle. La machine s'initialise en instanciant le contexte qui vient de lui être transmis et commence à exécuter le code traduit correspondant. La machine virtuelle maintient une information des pages mémoire modifiées lors des opérations réalisées par le code traduit.

A la fin de l'exécution, les informations recueillies sur les modifications mémoire servent à invalider les pages correspondantes du « data cache ». Les modifications subies par l'environnement sont également transmises de manière à modifier en conséquence l'environnement du processus front-end avant sa restauration. La machine virtuelle est arrêtée et le flot de contrôle est repris par l'hyperviseur qui relance le processus front-end.

La description qui vient d'être donnée de différents modes de réalisation de l'invention ne limite pas la portée de ladite invention auxdits modes de réalisation. Celle-ci est définie par les revendications qui suivent.

## Revendications

1. Système de traitement informatique comprenant un calculateur hôte (10), un calculateur additionnel (20), un module applicatif constitué d'un premier code exécutable (310), un module d'analyse (320) dudit premier code exécutable et un module (330) de génération d'un deuxième code exécutable segmenté notamment en blocs de code qui s'exécutent de manière préférentielle sur l'un des deux calculateurs, **caractérisé en ce que** ledit deuxième code exécutable comprend un sous-module (340) de gestion de la répartition des traitements entre le calculateur hôte et le calculateur additionnel et un sous-module (350) de gestion du calculateur additionnel en tant que machine virtuelle qui exécute les blocs alloués audit calculateur additionnel.

2. Système de traitement informatique selon la revendication 1 **caractérisé en ce que** le module d'analyse reçoit en entrée le premier code exécutable dudit applicatif et fournit notamment en sortie des métadonnées constituées par les points d'entrée de blocs de code susceptibles de constituer des points chauds de calcul, les structures de données utilisées par lesdits points chauds et les librairies de sous-programmes appelées par ledit premier code exécutable.

3. Système de traitement informatique selon la revendication 2 **caractérisé en ce que** les métadonnées en sortie du module d'analyse constituent des entrées du module de génération du deuxième code exécutable.

4. Système de traitement informatique selon la revendication 2 **caractérisé en ce que** les métadonnées en sortie du module d'analyse sont validées ou modifiées à l'exécution du deuxième code exécutable.

5. Système de traitement informatique selon la revendication 1 **caractérisé en ce que** le deuxième code exécutable s'exécute de manière préférentielle en mode utilisateur sur le calculateur hôte.

6. Système de traitement informatique selon la revendication 1 **caractérisé en ce que** le deuxième code exécutable utilise des fonctions spécifiquement optimisées implantées sur un driver de connexion du calculateur additionnel au calculateur hôte.

7. Système de traitement informatique selon la revendication 1 **caractérisé en ce que** le sous-module de gestion de la répartition des traitements entre le calculateur hôte et le calculateur additionnel est programmé pour diriger l'exécution de blocs basiques sur le calculateur hôte.

8. Système de traitement informatique selon la revendication 1 **caractérisé en ce que** le sous-module de gestion de la répartition des traitements entre le calculateur hôte et le calculateur additionnel est programmé pour donner au deuxième code exécutable le contrôle de l'applicatif pour exécuter sur le calculateur additionnel des blocs choisis en fonction de critères paramétrables et pour reprendre le contrôle de l'applicatif à la fin de l'exécution de chaque bloc.

9. Système de traitement informatique selon la revendication 1 **caractérisé en ce que** le sous-module de gestion de la répartition des traitements entre le calculateur hôte et le calculateur additionnel est programmé pour que les blocs du deuxième code exécutable soient des copies de blocs du premier code exécutable, lesdits blocs du premier code exécutable étant conservés dans une mémoire cache.

10. Système de traitement informatique selon la revendication 1 **caractérisé en ce que** le sous-module de gestion de la répartition des traitements entre le calculateur hôte et le calculateur additionnel comprend des instructions pour détecter les blocs de code les plus actifs.

11. Système de traitement informatique selon la revendication 1 **caractérisé en ce que** le sous-module de gestion de la répartition des traitements entre le calculateur hôte et le calculateur additionnel est programmé de manière à basculer l'exécution de l'applicatif vers les blocs du premier code exécutable pour traiter les exceptions.

12. Système de traitement informatique selon la revendication 1 **caractérisé en ce que** le sous-module de gestion de la répartition des traitements entre le calculateur hôte et le calculateur additionnel est programmé pour réaliser selon des règles paramétrables des copies du contexte de l'applicatif.

13. Système de traitement informatique selon la revendication 1 **caractérisé en ce que** le sous-module de gestion de la répartition des traitements entre le calculateur hôte et le calculateur additionnel comprend un sous-module de gestion d'une mémoire cache d'exécution de l'applicatif où sont stockées les structures des données sélectionnées pour être appelées par les blocs exécutés sur le calculateur additionnel.

14. Système de traitement informatique selon la revendication 1 **caractérisé en ce que** le sous-module de gestion du calculateur additionnel est programmé pour exécuter des librairies de sous-programmes correspondant à des profils et des sémantiques d'exécution définis pour des applicatifs particuliers.

15. Système de traitement informatique selon la revendication 14 **caractérisé en ce qu'**une machine virtuelle correspondant à un applicatif particulier est chargeable dynamiquement avant le lancement dudit applicatif par l'environnement.

16. Système de traitement informatique selon la revendication 14 **caractérisé en ce qu'**un des profils définit le calculateur additionnel comme une machine vectorielle.

17. Système de traitement informatique selon la revendication 14 **caractérisé en ce qu'**un des profils définit le calculateur additionnel comme apte à opérer selon un modèle de calcul par flux.

18. Système de traitement informatique selon la revendication 14 **caractérisé en ce que** le sous-module de gestion du calculateur additionnel comprend une interface de programmation de haut niveau des librairies pour chaque profil.

19. Système de traitement informatique selon la revendication 14 **caractérisé en ce que** le sous-module de gestion du calculateur additionnel comprend une interface de programmation de bas niveau du second code exécutable.

## Patentansprüche

1. Computerverarbeitungssystem, umfassend einen Host-Computer (10), einen Zusatzcomputer (20), ein aus einem ersten lauffähigen Code (310) gebildetes Anwendungsmodul, ein Analysemodul (320) des ersten lauffähigen Codes und ein Modul (330) zur Erzeugung eines zweiten lauffähigen Codes, der insbesondere in Codeblöcke unterteilt wird, die auf eine bevorzugte Weise auf einem der zwei Computer ausgeführt werden, **dadurch gekennzeichnet, dass** der zweite lauffähige Code ein Teilmodul (340) zum Verwalten der Verteilung der Verarbeitungen zwischen dem Host-Computer und dem Zusatzcomputer und einem Teilmodul (350) zum Verwalten des Zusatzcomputers als eine virtuelle Maschine umfasst, die die dem Zusatzcomputer zugewiesenen Blöcke ausführt.

2. Computerverarbeitungssystem nach Anspruch 1, **dadurch gekennzeichnet, dass** das Analysemodul als Eingabe den ersten lauffähigen Code der Anwendung empfängt und vor allem als Ausgabe die durch die Eingabepunkte der Codeblöcke gebildeten Metadaten, die geeignet sind, Berechnungs-Hotspots zu bilden, die durch die Hotspots verwendeten Datenstrukturen und die durch den ersten lauffähigen Code aufgerufenen Bibliotheken der Unterprogramme liefert.

3. Computerverarbeitungssystem nach Anspruch 2, **dadurch gekennzeichnet, dass** die Metadaten als Ausgabe des Analysemoduls Eingaben des Erzeugungsmoduls des zweiten lauffähigen Codes bilden.

4. Computerverarbeitungssystem nach Anspruch 2, **dadurch gekennzeichnet, dass** die Metadaten als Ausgabe des Analysemoduls bei der Ausführung des zweiten lauffähigen Codes validiert oder verändert werden.

5. Computerverarbeitungssystem nach Anspruch 1, **dadurch gekennzeichnet, dass** der zweite lauffähige Code auf eine bevorzugte Weise als Benutzermodus auf dem Host-Computer ausgeführt wird.

6. Computerverarbeitungssystem nach Anspruch 1, **dadurch gekennzeichnet, dass** der zweite lauffähige Code spezifisch optimierte Funktionen verwendet, die auf einem Verbindungstreiber des Zusatzcomputers zum Host-Computer ausgeführt werden.

7. Computerverarbeitungssystem nach Anspruch 1, **dadurch gekennzeichnet, dass** das Teilmodul zum Verwalten der Verteilung der Verarbeitungen zwischen dem Host-Computer und dem Zusatzcomputer programmiert wird, um die Ausführung von Grundblöcken auf dem Host-Computer zu steuern.

8. Computerverarbeitungssystem nach Anspruch 1, **dadurch gekennzeichnet, dass** das Teilmodul zum Verwalten der Verteilung der Verarbeitungen zwischen dem Host-Computer und dem Zusatzcomputer programmiert wird, um dem zweiten lauffähigen Code die Kontrolle der Anwendung zu geben, um auf dem Zusatzcomputer gewählte Blöcke als Funktion von parametrierbaren Kriterien auszuführen und um die Kontrolle der Anwendung am Ende der Ausführung jedes Blocks wiederzuerlangen.

9. Computerverarbeitungssystem nach Anspruch 1, **dadurch gekennzeichnet, dass** das Teilmodul zum Verwalten der Verteilung der Verarbeitungen zwischen dem Host-Computer und dem Zusatzcomputer programmiert wird, damit die Blöcke des zweiten lauffähigen Codes Kopien von Blöcken des ersten lauffähigen Codes sind, wobei die Blöcke des ersten lauffähigen Codes in einem Cache-Speicher gespeichert werden.

10. Computerverarbeitungssystem nach Anspruch 1, **dadurch gekennzeichnet, dass** das Teilmodul zum Verwalten der Verteilung der Verarbeitungen zwischen dem Host-Computer und dem Zusatzcomputer Befehle zum Nachweisen der aktivsten Codeblöcke umfasst.

11. Computerverarbeitungssystem nach Anspruch 1, **dadurch gekennzeichnet, dass** das Teilmodul zum Verwalten der Verteilung der Verarbeitungen zwischen dem Host-Computer und dem Zusatzcomputer auf eine Weise programmiert wird, um die Ausführung der Anwendung zu den Blöcken des ersten lauffähigen Codes umzuschwenken, um die Ausnahmen zu verarbeiten.

12. Computerverarbeitungssystem nach Anspruch 1, **dadurch gekennzeichnet, dass** das Teilmodul zum Verwalten der Verteilung der Verarbeitungen zwischen dem Host-Computer und dem Zusatzcomputer programmiert wird, um gemäß parametrierbaren Regeln Kopien des Kontextes der Anwendung auszuführen.

13. Computerverarbeitungssystem nach Anspruch 1, **dadurch gekennzeichnet, dass** das Teilmodul zum Verwalten der Verteilung der Verarbeitungen zwischen dem Host-Computer und dem Zusatzcomputer ein Teilmodul zum Verwalten eines Cache-Speichers der Ausführung der Anwendung umfasst, in dem die ausgewählten Datenstrukturen gespeichert werden, um durch die Blöcke aufgerufen zu werden, die auf dem Zusatzcomputer ausgeführt werden.

14. Computerverarbeitungssystem nach Anspruch 1, **dadurch gekennzeichnet, dass** das Teilmodul zum Verwalten des Zusatzcomputers programmiert wird, um Bibliotheken von Unterprogrammen auszuführen, die für spezielle Anwendungen definierten Profilen und Ausführungssemantiken entsprechen.

15. Computerverarbeitungssystem nach Anspruch 14, **dadurch gekennzeichnet, dass** eine virtuelle Maschine, die einer speziellen Anwendung entspricht, vor dem Start der Anwendung durch die Umgebung dynamisch ladbar ist.

16. Computerverarbeitungssystem nach Anspruch 14, **dadurch gekennzeichnet, dass** eines der Profile den Zusatzcomputer als eine Vektormaschine definiert.

17. Computerverarbeitungssystem nach Anspruch 14, **dadurch gekennzeichnet, dass** eines der Profile den Zusatzcomputer als fähig definiert, gemäß einem Datenstrom-Berechnungsmodell tätig zu sein.

18. Computerverarbeitungssystem nach Anspruch 14, **dadurch gekennzeichnet, dass** das Teilmodul zum Verwalten des Zusatzcomputers eine High-Level-Programmierschnittstelle der Bibliotheken für jedes Profil umfasst.

19. Computerverarbeitungssystem nach Anspruch 14, **dadurch gekennzeichnet, dass** das Teilmodul zum Verwalten des Zusatzcomputers eine Low-Level-Programmierschnittstelle des zweiten lauffähigen Codes umfasst.

## Claims

1. Data processing system comprising a host computer (10), an additional computer (20), an application module made of a first executable code (310), a module (320) for analysing the first executable code and a module (330) for generating a second executable code segmented in particular into code blocks which are preferably executed on one of the two computers, **characterised in that** the second executable code comprises a sub-module (340) for managing the distribution of the processing operations between the host computer and the additional computer and a sub-module (350) for managing the additional computer as a virtual machine which executes the blocks allocated to the additional computer.

2. Data processing system according to claim 1, **characterised in that** the analysis module receives at the input the first executable code of the application and provides in particular at the output metadata constituted by the input points of the code blocks which can constitute computing hotspots, the data structures used by the hotspots and the libraries of subroutines called up by the first executable code.

3. Data processing system according to claim 2, **characterised in that** the metadata at the output of the analysis module constitute inputs of the module for generating the second executable code.

4. Data processing system according to claim 2, **characterised in that** the metadata at the output of the analysis module are validated or modified when the second executable code is executed.

5. Data processing system according to claim 1, **characterised in that** the second executable code is preferably executed in user mode on the host computer.

6. Data processing system according to claim 1, **characterised in that** the second executable code uses specifically optimised functions installed on a driver for connecting the additional computer to the host computer.

7. Data processing system according to claim 1, **characterised in that** the sub-module for managing the distribution of the processing operations between the host computer and the additional computer is programmed to control the execution of basic blocks on the host computer.

8. Data processing system according to claim 1, **characterised in that** the sub-module for managing the distribution of the processing operations between the host computer and the additional computer is programmed to allow the second executable code to control the application for the execution on the additional computer of blocks chosen on the basis of parameterisable criteria and to regain control of the application at the end of the execution of each block.

9. Data processing system according to claim 1, **characterised in that** the sub-module for managing the distribution of the processing operations between the host computer and the additional computer is programmed so that the blocks of the second executable code are copies of blocks of the first executable code, the blocks of the first executable code being saved in a cache memory.

10. Data processing system according to claim 1, **characterised in that** the sub-module for managing the distribution of the processing operations between the host computer and the additional computer includes instructions to detect the most active code blocks.

11. Data processing system according to claim 1, **characterised in that** the sub-module for managing the distribution of the processing operations between the host computer and the additional computer is programmed in order to switch the execution of the application to the blocks of the first executable code in order to process exceptions.

12. Data processing system according to claim 1, **characterised in that** the sub-module for managing the distribution of the processing operations between the host computer and the additional computer is programmed to make copies of the application context according to parameterisable rules.

13. Data processing system according to claim 1, **characterised in that** the sub-module for managing the distribution of the processing operations between the host computer and the additional computer includes a sub-module for managing a cache memory for executing the application in which the selected data structures are stored to be called up by the blocks executed on the additional computer.

14. Data processing system according to claim 1, **characterised in that** the sub-module for managing the additional computer is programmed to execute libraries of subroutines corresponding to profiles and execution semantics defined for specific applications.

15. Data processing system according to claim 14, **characterised in that** a virtual machine corresponding to a specific application is dynamically loadable before the launch of the application by the environment.

16. Data processing system according to claim 14, **characterised in that** one of the profiles defines the additional computer as a vector machine.

17. Data processing system according to claim 14, **characterised in that** one of the profiles defines the additional computer as being suitable for operating according to a flow computing model.

18. Data processing system according to claim 14, **characterised in that** the sub-module for managing the additional computer includes a high-level programming interface for programming the libraries for each profile.

19. Data processing system according to claim 14, **characterised in that** the sub-module for managing the additional computer includes a low-level programming interface for programming the second executable code.
